# EUROPÄISCHE PATENTSCHRIFT

(11) **EP 2 490 415 B1**
(45) Veröffentlichungstag und Bekanntmachung des Hinweises auf die Patenterteilung: **28.12.2016**
(21) Anmeldenummer: 11155052.1
(22) Anmeldetag: 18.02.2011
(51) Int. Cl.: H04M 1/60, H04M 1/725

(54) **System und Verfahren zur Nachführung von Lautsprecherausgaben entsprechend der räumlichen Bewegung eines Nutzers**
System and method for tracking loudspeaker signals according to the movement of a user in a space
Système et procédé de suivi d'émissions de haut-parleurs correspondant au mouvement spatial d'un utilisateur

(43) Veröffentlichungstag der Anmeldung: 22.08.2012
(73) Patentinhaber: Gigaset Communications GmbH, 40549 Düsseldorf (DE)
(72) Erfinder: Goertz, Werner, 46282, Dorsten (DE); Euscher, Christoph, 46414, Rhede (DE)
(74) Vertreter: Michalski Hüttermann & Partner Patentanwälte mbB

(56) Entgegenhaltungen:
- EP-A2- 0 736 992
- WO-A1-2009/080704
- WO-A1-2009/153684
- US-A1- 2003 210 770

## Beschreibung

Die vorliegende Erfindung betrifft ein drahtloses Telefonsystem für Mehrraumumgebungen sowie ein Verfahren zum Betrieb eines solchen. Insbesondere betrifft die vorliegende Erfindung ein System, bei welchem ein Benutzer ein drahtlos an eine als Steuereinrichtung dienende Basisstation angebundenes Mikrofon mit sich führt und stationär angeordnete Lautsprecher das Sprachsignal eines Gesprächspartners wiedergeben.

Drahtlose Telefonsysteme sind seit vielen Jahren im Bereich der Heim- und Bürokommunikationssysteme bekannt. Hierbei werden mobile Telekommunikationsendgeräte über eine Funkverbindung mit einer Basisstation verbunden, welche an ein Telekommunikationsnetz angeschlossen ist. Die dabei eingesetzten Telekommunikationsendgeräte (Mobilteil) umfassen zumindest ein Mikrofon, einen Lautsprecher und eine Sende-Empfangseinrichtung zur Anbindung an ein Funknetz.

In vielen mobilen Endgeräten ist eine Freisprechfunktion vorgesehen, um das Führen eines Telefongespräches zu ermöglichen, ohne das Mobilteil in den Händen halten zu müssen. Hierbei besteht jedoch zum einen das Problem, dass der Betrieb des Mobilteils in Freisprech-Betriebsmodus aufgrund der mit der Lautsprecherwiedergabe des Sprachsignals einer Gegenstelle einhergehenden Verstärkerleistung energieintensiv ist und die Betriebsdauer des Mobilteils durch die begrenzte Kapazität der zur Energieversorgung des Mobilteils genutzten Batterien und/oder Akkumulatoren deutlich beschränkt ist. Zum anderen muss das Mobilteil bei Verlassen der akustischen Umgebung um das Mobilteil herum, beispielsweise bei Verlassen eines Raumes, mitgeführt werden, um das Gespräch mit der Gegenstelle weiterführen zu können. Hierzu muss das Mobilteil jedoch wieder in die Hand genommen werden, was eine deutliche Einschränkung des Komforts darstellt.

Das Dokument EP0736992 A2 beschreibt ein Telefonsystem zur schnurlosen Übertragung eines akustischen Signals mit einem Basisteil, einem Mobilteil sowie einer Wiedergabeeinrichtung.

Das Dokument US 2003/0210770 A1 beschreibt eine Vorrichtung, welche zur Übertragung von Sprachnachrichten über ein bestehendes Netzwerk genutzt wird.

Das Dokument WO 2009/153684 A1 betrifft ein telefonisches Notrufsystem, welches dazu dient, einer Person im Notfall die Kommunikation zu einer anderen Person zu ermöglichen.

Das Dokument WO 2009/080704 A1 beschreibt ein Verfahren und Telefon zum schnurlosen Telefonieren mit einer Basisstation mit einer integrierten Wiedergabeeinrichtung sowie mehreren Mobilteilen.

Das hierzu im Stand der Technik als Alternative vorgesehene Nutzen eines Kopfhörersystems wird von vielen Nutzern als unangenehm empfunden, so dass Bedarf an einer weiteren Alternative zur verbesserten mobilen Kommunikation besteht.

Dies berücksichtigend ist es die Aufgabe der vorliegenden Erfindung, ein Telefonsystem sowie ein Verfahren zum Betrieb eines solchen anzugeben, welches das Führen von Telefongesprächen im Freisprechmodus erlaubt und die genannten Problematiken zu überwinden vermag.

Gelöst wird diese Aufgabe durch ein Telefonsystem gemäß Anspruch 1 sowie ein Verfahren zum Betrieb eines Telefonsystems gemäß Anspruch 8. Ausgestaltungen des erfindungsgemäßen Telefonsystems und Verfahrens finden sich in den abhängigen Ansprüchen und der nachfolgen Beschreibung.

Es wird somit ein Telefonsystem vorgeschlagen, aufweisend eine Basisstation, wenigstens ein drahtlos an die Basisstation signaltechnisch angebundenes Mobilteil, sowie wenigstens eine mit der Basisstation signaltechnisch verbundene Wiedergabeeinrichtung, welches dadurch gekennzeichnet ist, dass das Telefonsystem eine einen Sender und einen Empfänger aufweisende Sensoreinrichtung zur Ermittlung der akustischen Nähe des Mobilteils zu der Wiedergabeeinrichtung aufweist und die Basisstation eine Einrichtung zur Weiterleitung eines in das Telefonsystem eingehenden Sprachsignals an die Wiedergabeeinrichtung aufweist, mittels welcher ein eingehendes Sprachsignal automatisch an eine Wiedergabeeinrichtung weiterleitbar ist, wenn sich das Mobilteil in akustischer Nähe zu der Wiedergabeeinrichtung befindet, wobei der Sender und der Empfänger der Sensoreinrichtung auf Basis eines akustischen oder optischen Signals arbeiten.

Durch das erfindungsgemäße Telefonsystem braucht das eingehende Sprachsignal nicht mehr an das Mobilteil weitergeleitet zu werden, sondern wird über vorzugsweise ortsfeste Wiedergabeeinrichtungen so wiedergegeben, dass es von einem Nutzer wahrgenommen werden kann. Das vorzugsweise ortsfeste Wiedergabesystem kann dabei vorteilhafter Weise an eine permanente Energieversorgung, wie beispielsweise eine Netzsteckdose, angeschlossen sein. Da durch das erfindungsgemäße Telefonsystem die Notwendigkeit der Wiedergabe des eingehenden Sprachsignals über das Mobilteil entfällt, entfällt hierdurch auch der mit dieser Wiedergabe einhergehende Energiebedarf des Mobilteils, wodurch sich die nutzbare Betriebsdauer des Mobileteils auch im Freisprechbetrieb deutlich verlängert.

In einer vorteilhaften Ausgestaltung der Erfindung sind das Mobilteil und/oder die Wiedergabeeinrichtung drahtlos unter Anwendung des DECT-Standards an die Basisstation angebunden.

Unter der akustischen Nähe ist dabei im Sinne der Erfindung der Abstand zu verstehen, den ein Schallsignal zwischen dem Mobilteil und der Wiedergabeeinrichtung zurücklegen muss. So kann beispielsweise der geometrische Abstand zwischen einem Mobilteil und einer Wiedergabeeinrichtung deutlich geringer sein, als der akustische Abstand, wenn beispielsweise eine Wand oder eine anderweitige akustische Barriere zwischen dem Mobileteil und der Wiedergabeeinrichtung liegen.

In einer bevorzugten Ausgestaltung der Erfindung ist das Mobilteil als reines Mikrofon-System ausgelegt, wodurch dieses sehr platzsparend ausgeführt werden kann, da die Notwendigkeit eines Lautsprechers zur Wiedergabe entfällt. Durch den Verzicht eines Lautsprechers kann demgemäß auch auf eine entsprechende Verstärkungseinrichtung im Mobilteil verzichtet werden, wodurch eine weitere Ersparnis der Baugröße erfolgt. Gleichzeitig führt der Verzicht auf eine Verstärkungseinrichtung zu einem deutlich geringeren Energiebedarf des Mobilteils, wodurch bei gleicher Kapazität der Energieversorgung eine deutlich erhöhte Betriebsdauer des Mobilteils erreicht werden kann.

Alternativ kann das Mobilteil auch mit einem ggf. kleinen, einfachen Lautsprecher ausgestattet sein, der nur in bestimmten Situationen zum Einsatz kommt, beispielsweise falls der akustische Abstand vom Mobilteil zur nächsten Wiedergabeeinrichtung so groß ist, dass keine zufriedenstellende Verständlichkeit des von der nächsten Wiedergabeeinrichtung wiedergegebenen Gesprächs am Ort des Mobilteils gegeben ist.

In einer besonders bevorzugten Ausführung der Erfindung ist das Mobilteil als eine Art Clip ausgeführt, welcher an der Kleidung eines Nutzers an geeigneter Stelle, wie beispielweise einem Revers oder Kragen, befestigt werden kann.

In einer Ausgestaltung des erfindungsgemäßen Telefonsystems arbeiten der Sender und der Empfänger der Sensoreinrichtung auf Basis eines akustischen oder optischen Signals außerhalb der menschlichen Wahrnehmung. Dies bietet den Vorteil, dass die Bestimmung des akustischen Abstandes bzw. das Feststellen der Nähe eines Mobilteils zu einer Wiedergabeeinrichtung vom Nutzer unbemerkt erfolgen kann, wodurch der Nutzungskomfort erhöht wird. Unter einem akustischen Signal außerhalb der menschlichen Wahrnehmung ist erfindungsgemäß auch ein Signal zu verstehen, das zwar dem Grunde nach als alleinstehendes Signal vom Menschen wahrnehmbar wäre, aber aufgrund von Maskierungen durch andere akustische Signale vom Menschen nicht wahrgenommen wird. So ist unter anderem bekannt, dass der Mensch leise Audiosignale dann nicht wahrnehmen kann, wenn zeitnah andere, lautere Audiosignale insbesondere mit ähnlichem Frequenzbereich auftreten. Dieser Effekt tritt besonders stark auf, wenn das leise Signal unmittelbar auf ein lauteres Signal folgt. Diese Effekte können erfindungsgemäß ausgenutzt werden, um die vom Sender der Sensoreinrichtung ausgesendeten Signale bspw. innerhalb der aktuellen Sprachausgabe vor dem Menschen zu "verstecken".

In einer Ausgestaltung der Erfindung umfasst die Sensoreinrichtung einen in oder an dem Mobilteil angeordneten Sender und einen in oder an der Wiedergabeeinrichtung angeordneten Empfänger, wobei der Sender und Empfänger auf Basis eines optischen Signals außerhalb des menschlich wahrnehmbaren elektromagnetischen Spektrums arbeiten. Vorzugsweise arbeiten dabei Sender und Empfänger im Infrarot-Bereich des elektromagnetischen Spektrums. Dies bietet den Vorteil, dass das zum Erkennen der Nähe eines Mobilteils zu einer Wiedergabeeinrichtung verwendete Signal vom Nutzer nicht wahrgenommen wird, andererseits jedoch eine der Ausbreitung des von der Wiedergabeeinrichtung wiedergegeben Sprachsignals sehr ähnliche Verbreitungscharakteristik aufweist. Verlässt beispielsweise ein Nutzer einen Raum und schließt die Tür zu diesem, so wird die Wiedergabeeinrichtung sowohl akustisch als auch optisch von dem Mobilteil getrennt, was durch das nicht mehr empfangbare IR-Signal feststellbar ist. Befindet sich der Nutzer hingegen in einem neuen Raum, kann das vom Mobilteil ausgesendete IR-Signal von den in dem neuen Raum befindlichen Wiedergabeeinrichtungen empfangen werden und als Steuerimpuls für die Wiedergabe eines Sprachsignals eines in das Telefonsystem eingehenden Sprachsignals über die Wiedergabeeinrichtungen in dem neuen Raum genutzt werden. Vorzugsweise kann es hierbei vorgesehen sein, dass als Sender eine IR-LED, wie beispielsweise eine Galliumarsenid oder Aluminiumgalliumarsenid LED, und als Empfänger ein IR-Photodetektor, wie beispielsweise eine Photodiode, ein Phototransistor, ein CCD-Sensor oder CMOS-Sensor, dienen. Die Wellenlänge der vom Sender emittierten Elektromagnetischen Strahlung kann dabei vorzugsweise in einem Bereich zwischen 880 nm und 950 nm liegen.

In einer weiteren Ausgestaltung der Erfindung umfasst die Sensoreinrichtung einen in oder an dem Mobilteil angeordneten Empfänger und einen in oder an der Wiedergabeeinrichtung angeordneten Sender, wobei der Sender und Empfänger auf Basis eines akustischen Signals außerhalb des menschlich wahrnehmbaren Frequenzspektrums arbeiten. Dies bietet gegenüber der Verwendung von optischen Signalen den Vorteil, dass die akustischen Verhältnisse besser erfasst werden können. So kann bspw. eine geschlossene Glastür ein optisches Signal passieren lassen und so zu fehlerhaften Ergebnissen führen. In einer bevorzugten Ausgestaltung arbeiten dabei Sender und Empfänger in einem Frequenzbereich oberhalb der menschlichen Wahrnehmung. Es ist bekannt, dass Töne oberhalb von 20 kHz vom Menschen generell nicht mehr wahrgenommen werden können. Diese Grenze verschiebt sich jedoch mit zunehmendem Alter in Richtung niedrigerer Frequenzen. Ein erheblicher Anteil der Bevölkerung kann bspw. bereits Frequenzen oberhalb von 15..17 kHz nicht mehr wahrnehmen. Ferner ist bekannt, dass die Wahrnehmbarkeit von Signalen nicht nur von der Frequenz, sondern auch von der Lautstärke der Signale abhängt. Dies bietet ebenfalls den Vorteil, dass das zum Erkennen der Nähe eines Mobilteils zu einer Wiedergabeeinrichtung verwendete Signal vom Nutzer nicht wahrgenommen wird, andererseits jedoch eine der Ausbreitung des von der Wiedergabeeinrichtung wiedergegeben Sprachsignals sehr ähnliche Verbreitungscharakteristik aufweist. In einer weiteren bevorzugten Ausgestaltung der Erfindung arbeiten der Sender und Empfänger in einem Frequenzbereich < 20 Hz. Auch ein solches Signal liegt außerhalb der akustischen Wahrnehmbarkeit des Nutzers, bietet aber zusätzlich den Vorteil, dass sich ein solches Signal weniger gerichtet sondern im Wesentlichen kugelsymmetrisch ausbreitet.

Alternativ kann es vorgesehen sein, dass der Sender und der Empfänger der Sensoreinrichtung auf Basis eines akustischen Signals innerhalb der menschlichen Wahrnehmung arbeiten. So kann es vorgesehen sein, dass das über die Wiedergabeeinrichtungen wiedergegebene Sprachsignal selbst als Referenzsignal zur Bestimmung der akustischen Nähe einer Wiedergabeeinrichtung zu dem Mobilteil dient. Ebenso kann es in einer Ausgestaltung der Erfindung vorgesehen sein, dass ein kurzer akustischer Impuls in einem Frequenzbereich innerhalb der menschlichen Wahrnehmung, beispielsweise innerhalb eines Frequenzbereiches zwischen 300 Hz und 3400, Hz als Referenzsignal genutzt wird. Dabei kann es insbesondere vorgesehen sein, dass der Impuls derart kurz ist, dass es vom Nutzer im Wesentlichen nicht bemerkt bzw. wahrgenommen wird. Weiterhin kann es vorgesehen sein, dass der Sender und der Empfänger auf Basis eines akustischen Signals arbeiten, das zwar dem Grunde nach als alleinstehendes Signal vom Menschen wahrnehmbar wäre, aber aufgrund von Maskierungen durch andere akustische Signale vom Menschen nicht wahrgenommen wird. So ist unter anderem bekannt, dass der Mensch leise Audiosignale dann nicht wahrnehmen kann, wenn zeitnah andere, lautere Audiosignale insbesondere mit ähnlicher Frequenz auftreten. Dieser Effekt tritt besonders stark auf, wenn das leise Signal unmittelbar auf ein lauteres Signal folgt. Diese Effekte können erfindungsgemäß ausgenutzt werden, um die vom Sender der Sensoreinrichtung ausgesendeten Signale bspw. innerhalb der aktuellen Sprachausgabe vor dem Menschen zu "verstecken".

In einer weiteren Ausgestaltung der Erfindung wird der in der Wiedergabeeinrichtung zur Sprachausgabe vorhandene Lautsprecher auch zur Ausgabe des akustischen Signals verwendet. Hierdurch entfällt die Notwendigkeit einer separaten Ausgabeeinheit.

In einer weiteren Ausgestaltung der Erfindung wird das in dem Mobilteil befindliche Mikrofon auch zur Aufnahme des akustischen Signals genutzt werden. Hierdurch entfällt die Notwendigkeit einer separaten Aufnahmeeinheit.

Sowohl die akustischen, als auch die optischen Signale können mehrere Frequenzkomponenten umfassen und auch zeitlich veränderlich sein. Eine solche Ausgestaltung des vom Sender ausgesendeten Signals kann die Erkennung im Empfänger erleichtern und die Störanfälligkeit des Empfängers verringern.

Die vorzugsweise ortsfesten Wiedergabeeinrichtungen können erfindungsgemäß drahtgebunden oder drahtlos an die Basisstation angebunden sein, wobei eine drahtlose Anbindung über das Funknetz, über welches auch die Mobilteile des Telefonsystems an die Basisstation angebunden sind bevorzugt ist. In einer weiteren Ausgestaltung der Erfindung sind die ortsfesten Wiedergabeeinrichtungen und die Basisstation signaltechnisch über das Stromleitungsnetz miteinander verbunden, so dass es zur signaltechnischen Verbindung der genannten Komponenten beispielsweise genügt, diese an das gemeinsame Stromversorgungsnetz eines Gebäudes anzuschließen. Dabei kann es insbesondere vorgesehen sein, das die Wiedergabeeinrichtungen und die Basisstation signaltechnisch mittels eines Ethernets miteinander verbunden sind. Hierbei können beispielsweise unter den Namen dLan, Power LAN, oder Powerline Communications bekannte Technologien zum Einsatz gelangen.

Hinsichtlich des Verfahrens wird die Aufgabe der Erfindung somit durch ein Verfahren zum Betrieb eines Telefonsystems gelöst, wobei das Telefonsystem eine Basisstation, wenigstens ein drahtlos an die Basisstation signaltechnisch angebundenes Mobilteil, wenigstens eine mit der Basisstation signaltechnisch verbundene Wiedergabeeinrichtung, sowie eine signaltechnisch mit der Basisstation verbundene Sensoreinrichtung zur Ermittlung des akustischen Abstandes des Mobilteils zu der Wiedergabeeinrichtung aufweist, welches dadurch gekennzeichnet ist, dass die Sensoreinrichtung einen Sender und einen Empfänger umfasst, welche auf Basis eines akustischen oder optischen Signals arbeiten und dass ein in das Telefonsystem eingehendes Sprachsignal automatisch über die Wiedergabeeinrichtung wiedergegeben wird, wenn durch die Sensoreinrichtung erkannt wird, dass sich das Mobilteils in akustischen Nähe zur Wiedergabeeinrichtung befindet.

In einer bevorzugten Ausgestaltung des Verfahrens wird zur Ermittlung der akustischen Nähe zwischen Mobilteil und Wiedergabeeinrichtung zwischen dem Sender und dem Empfänger der Sensoreinrichtung ein Signal übertragen, welches in seiner Verbreitungscharakteristik im Wesentlichen der Verbreitungscharakteristik einem von der Wiedergabeeinrichtung wiedergegebenen Sprachsignals entspricht. Vorzugsweise liegt das zwischen Sender und Empfänger übertragene Signal außerhalb der menschlichen Wahrnehmung. Dabei kann es insbesondere vorgesehen sein, dass zwischen Sender und Empfänger ein Infrarot-Signal übertragen wird. Hierbei kann die Wellenlänge des zwischen Sender und Empfänger übertragenen Signals vorzugsweise zwischen 880 nm und 950 nm liegen. Vorzugsweise ist hierbei der Sender in oder an dem Mobilteil angeordnet, während der Empfänger in oder an der Wiedergabeeinrichtung angeordnet ist.

In einer weiteren Ausgestaltung des erfindungsgemäßen Verfahrens wird zwischen Sender und Empfänger ein akustisches Signal in einem Frequenzbereich > 15kHz übertragen. Hierbei ist vorzugsweise der Sender in oder an der Wiedergabeeinrichtung angeordnet und der Empfänger in oder an dem Mobilteil. Dies bietet ebenfalls den Vorteil, dass das zum Erkennen der Nähe eines Mobilteils zu einer Wiedergabeeinrichtung verwendete Signal vom Nutzer nicht wahrgenommen wird, andererseits jedoch eine der Ausbreitung des von der Wiedergabeeinrichtung wiedergegeben Sprachsignals sehr ähnliche Verbreitungscharakteristik aufweist. In einer weiteren bevorzugten Ausgestaltung des Verfahrens wird zwischen dem Sender und Empfänger ein akustisches Signal im Infra-Schall-Bereich, vorzugsweise in einem Frequenzbereich < 20 Hz, übertragen. Auch ein solches Signal liegt außerhalb der akustischen Wahrnehmbarkeit des Nutzers, bietet aber zusätzlich den Vorteil, dass sich ein solches Signal weniger gerichtet sondern im Wesentlichen kugelsymmetrisch ausbreitet.

Um bei einer Mehrzahl von Wiedergabeeinrichtungen ermitteln zu können, von welcher Wiedergabeeinrichtung bzw. von welchem Sender ein Signal ausgegeben wurde, kann es vorgesehen sein, die Signale von den einzelnen Wiedergabeeinrichtungen bzw. Sendern zeitversetzt auszugeben und/oder je Sender unterschiedliche Signale auszugeben. Im Falle der gleichzeitigen Ausgabe unterschiedlicher Signale ist es vorteilhaft, wenn diese sich gegenseitig nicht stören, d.h. z.B. in einem unterschiedlichen Frequenzbereich liegen, oder zueinander orthogonal codiert sind. Die Ausgabe kann dabei von den Wiedergabeeinrichtungen bzw. Sendern autark initiiert werden, oder von der Basisstation gesteuert erfolgen. Es kann jedoch auch vorgesehen sein, dass die Ausgabe eines entsprechenden Signals durch das Mobilteil ausgelöst wird. Die zu sendenden Signale können erfindungsgemäß sowohl in der jeweiligen Wiedergabeeinrichtung bzw. dem jeweiligen Sender vorbereitet vorliegen, als auch von der Basisstation generiert und dann zur Aussendung an die einzelnen Wiedergabeeinrichtungen bzw. Sender übermittelt werden.

Um bei einer Mehrzahl von Mobilteilen eine Zuordnung der jeweilig nächstliegenden Wiedergabeeinrichtung zum jeweiligen Mobilteil treffen zu können, ist eine zeitversetzte Ausgabe der Signale von den einzelnen Sendern oder alternativ eine Ausgabe von unterschiedlichen Signalen pro Sender ebenfalls nützlich. Für den Fall, dass sich die Sender wiedergabeeinrichtungsseitig befinden, kann für jedes Mobilteil durch die durch den mobilteilseitigen Empfänger empfangenen Signale die jeweils nächstliegende Wiedergabeeinrichtung ermittelt werden. Für den Fall, dass sich die Sender mobilteilseitig befinden, kann durch die durch den wiedergabeeinrichtungsseitigen Empfänger empfangenen Signale ebenfalls die dem Mobilteil nächstliegende Wiedergabeeinrichtung ermittelt werden.

Auch bei einer Mehrzahl von Mobilteilen und einer Mehrzahl von Wiedergabeeinrichtungen ist somit eine Zuordnung zwischen den jeweiligen Mobilteilen und den jeweils nächstliegenden Wiedergabeeinrichtungen möglich.

Die Auswertung der von den Empfängern empfangenen Signale kann erfindungsgemäß einerseits durch das jeweilige Mobilteil erfolgen, welches den Empfang des Signals an die Basisstation signalisiert, welche dann wiederum eine entsprechende Übermittlung eine Sprachsignals an die entsprechende Wiedergabeeinrichtung veranlasst. Vorzugsweise erfolgt jedoch eine Auswertung des Signals in der Basisstation, indem beispielsweise das Mikrofonsignal des Mobilteils entsprechend gefiltert und ausgewertet wird. Letzteres hat den Vorteil, dass die Filter- und Auswertelogik sowie die die Ansteuerungslogik zur Ansteuerung der einzelnen Wiedergabeeinrichtungen in einem einzigen Gerät, nämlich der Basisstation, implementiert werden kann. Hierdurch wird auch der Energieverbrauch des Mobilteils reduziert, was die Betriebsdauer verlängern kann. Ferner wird eine preisgünstigere Gestaltung des Mobilteils ermöglicht.

Gemäß einer weiteren Ausgestaltung des erfindungsgemäßen Verfahrens wird das zwischen Sender und Empfänger übertragene Signal moduliert. Besonders bevorzugt wird das Signal dabei mittels Amplituden- und/oder Phasenmodulation und/oder Frequenz- und/oder Zeitmultiplexing und/oder Codemultiplexing-Methoden moduliert. Hierdurch ist es möglich, innerhalb des Signales weitere Informationen zu übermitteln, welche beispielsweise eine eindeutige Identifizierung des Senders und/oder Empfängers ermöglichen. Hierbei können auch Modulationsverfahren Verwendung finden, wie sie beispielsweise aus dem Bereich der Datenübertragung mittels Infrarot-Signalen (IrDa) bekannt sind.

Die Erfindung wird nachfolgend anhand von Figuren weiter erläutert. Dabei zeigt:
- Fig. 1: eine erste Ausgestaltung der Erfindung mit einem Mobileteil und mehreren ortsfesten Wiedergabeeinrichtungen;
- Fig. 2: eine weitere Ausgestaltung der Erfindung mit einem Mobilteil und mehreren ortsfesten Wiedergabeeinrichtungen;

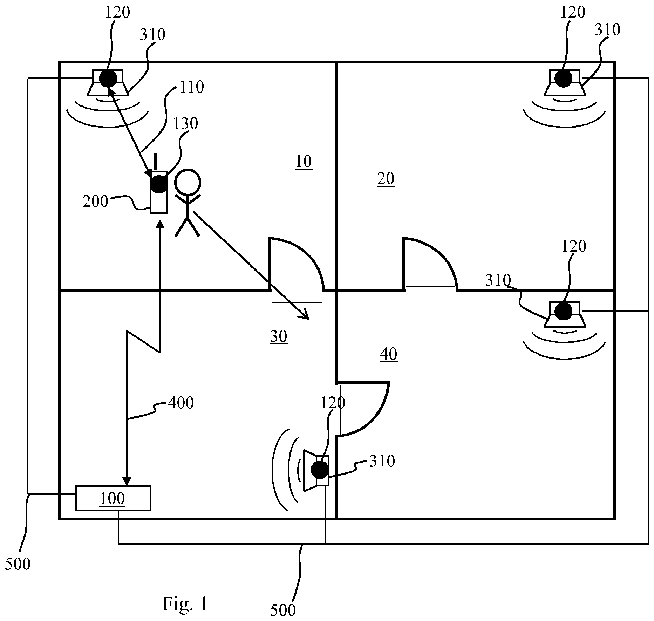

In Fig. 1 ist erste Ausgestaltung der Erfindung mit einem Mobileteil 200 und einer ortsfesten Wiedergabeeinrichtung 310 gezeigt, welche sich in einem Raum 10 befinden. Die ortsfeste Wiedergabeeinrichtung 310 ist signaltechnisch über Verbindung 500 mit einer Basisstation 100 verbunden, an welche das Mobilteil 200 über ein geeignetes Funknetzwerk 400, wie beispielsweise eine Funkverbindung auf Basis des DECT-Standards, angebunden ist. Hierbei kann die Verbindung 500 sowohl eine Funkverbindung, vorzugsweise ebenfalls auf Basis des DECT-Standards oder eine kabelgebundene Verbindung, wie beispielweise eine Ethernet-Verbindung, sein. Die Wiedergabeeinrichtung 310 weist einen Sender 120 auf, welcher ein akustisches Signal 110 außerhalb der menschlichen Wahrnehmung aussendet, welches durch einen Empfänger 130 im Mobilteil 200 wahrgenommen werden kann. In der Basisstation 100 ist eine Einrichtung vorgesehen, welche ein Sprachsignal eines in das Telefonsystem eingehenden Anrufs einer externen Gegenstelle an die Wiedergabeeinrichtung 310 weiterleitet, wenn über den Empfang des Signals 110 festgestellt wurde, dass sich das Mobilteil 200 in akustischer Nähe zu der Wiedergabeeinrichtung 310 befindet. Als Grundlage für die Bestimmung der akustischen Nähe dient dabei das von dem Sender 120 ausgesendete Signal 110, welches vorzugsweise eine akustische Verbreitungscharakteristik aufweist, die der akustischen Verbreitungscharakteristik eine über die Wiedergabeeinrichtung 310 wiedergegebenen Sprachsignals entspricht. Vorzugsweise umfasst das Signal 110 auch Informationen, welche eine eindeutige Identifizierung des jeweils aussenden Senders 120 erlauben. Dies kann beispielsweise durch Übermittlung eines Identifizierungscodes erfolgen, oder auch durch Anwendung geeigneter Zeit- und/oder Frequenzmultiplex-Verfahren. Verlässt ein Nutzer nun beispielsweise den Raum 10 und wechselt in den Raum 30, wird von dem Mobilteil 200 nicht mehr das Signal 110 des Senders 120 in Raum 10 empfangen, sondern das Signal des sich in Raum 30 befindlichen Senders. Durch entsprechende Übermittlung dieses Zustandswechsels an die Basisstation kann nun ein Sprachsignal eines eingehenden Anrufs an die in Raum 30 befindliche Wiedergabeeinrichtung über den Signalweg 500 weitergeleitet werden. Hierdurch ist auch eine dynamische Nachverfolgung des Nutzers bei einem Wechsel der Räume in einer Mehrraumsituation möglich.

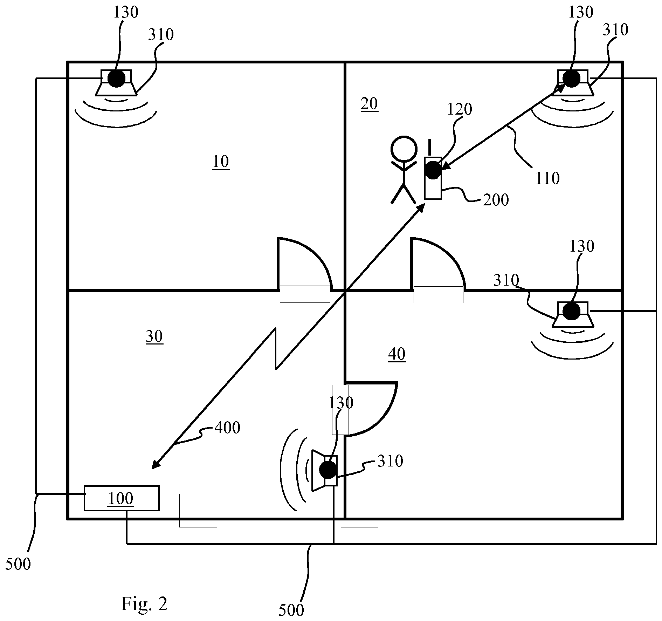

Fig. 2 zeigt eine weitere Ausgestaltung der Erfindung welche in seiner grundlegenden Archetektur der Ausgestaltung in Fig. 1 gleicht. Im Unterschied zu der in Fig. 1 gezeigten Ausgestaltung weist das Mobilteil 200 in der hier gezeigten Ausgestaltung einen Sender 120 auf, während der Empfänger 130 in oder an den Wiedergabeeinrichtungen 310 angeordnet ist. Hierbei kann es vorzugsweise vorgesehen sein, dass der Sender 120 durch eine IR-LED und der Empfänger 130 durch einen IR-Photodetektor, wie beispielsweise einer Photodiode, einem Phototransistor, einem CCD-Sensor oder CMOS-Sensor, gebildet sind. Das zwischen Sender 120 und Empfänger 130 übertragene Signal 110 kann dabei auch Informationen umfassen, welche eine eindeutige Identifizierung des jeweils aussendenden Senders 120 erlauben. Hierdurch ist bei der Verwendung mehrerer Mobilteile 200 in einem System eine eindeutige Zuordnung mehrerer eingehender Sprachsignale zu einzelnen Mobilteilen 200 und eine entsprechende Wiedergabe über unterschiedliche Wiedergabeeinrichtungen 310 möglich. Zur Informationsübermittlung innerhalb des Signals 110 kann es vorgesehen sein, dass auf Übertragungsprotokolle zurückgegriffen wird, wie sie beispielsweise bei IrDA-Schnittstellen zum Einsatz gelangen.

## Patentansprüche

1. Telefonsystem, aufweisend eine Basisstation (100), wenigstens ein drahtlos an die Basisstation (100) signaltechnisch angebundenes Mobilteil (200), wenigstens eine mit der Basisstation (100) signaltechnisch verbundene Wiedergabeeinrichtung (310), sowie eine Einrichtung zur Weiterleitung eines in das Telefonsystem eingehenden Sprachsignal an die Wiedergabeeinrichtung (310),
**dadurch gekennzeichnet, dass** das Telefonsystem eine einen Sender (120) und einen Empfänger (130) aufweisende Sensoreinrichtung zur Ermittlung der akustischen Nähe des Mobilteils (200) zu der Wiedergabeeinrichtung (310) aufweist und wobei ein eingehendes Sprachsignal mittels der Einrichtung zur Weiterleitung automatisch an eine Wiedergabeeinrichtung (310) weiterleitbar ist, wenn sich das Mobilteil (200) in akustischer Nähe zu der Wiedergabeeinrichtung (310) befindet, wobei die Arbeitsweise der Sender (120) und Empfänger (130) der Sensoreinrichtung auf einem akustischen oder optischen Signal (110) basiert.

2. Telefonsystem gemäß Anspruch 1, wobei die Arbeitsweise der Sender (120) und der Empfänger (130) der Sensoreinrichtung auf einem akustischen oder optischen Signal (110) außerhalb der menschlichen Wahrnehmung basiert.

3. Telefonsystem gemäß einem der Ansprüche 1 oder 2, wobei die Sensoreinrichtung einen in oder an dem Mobilteil (200) angeordneten Sender (120) und einen in oder an der Wiedergabeeinrichtung (310) angeordneten Empfänger (130) umfasst, wobei die Arbeitsweise des Senders (120) und Empfängers (130) auf einem optischen Signal (110) außerhalb des menschlich wahrnehmbaren elektromagnetischen Spektrums basiert.

4. Telefonsystem gemäß Anspruch 3, wobei die Arbeitsweise des Senders (120) und Empfängers (130) auf einem Infrarot-Signal (110) basiert.

5. Telefonsystem gemäß einem der Ansprüche 1 oder 2, wobei die Sensoreinrichtung einen in oder an dem Mobilteil (200) angeordneten Empfänger (130) und einen in oder an der Wiedergabeeinrichtung (310) angeordneten Sender (120) umfasst, wobei die Arbeitsweise des Senders (120) und Empfängers (130) auf einem akustischen Signal (110) basiert, das das zwar dem Grunde nach als alleinstehendes Signal vom Menschen wahrnehmbar wäre, aber aufgrund von Maskierungen durch andere akustische Signale vom Menschen nicht wahrnehmbar ist.

6. Telefonsystem gemäß einem der Ansprüche 1 oder 2, wobei die Sensoreinrichtung einen in oder an dem Mobilteil (200) angeordneten Empfänger (130) und einen in oder an der Wiedergabeeinrichtung (310) angeordneten Sender (120) umfasst, wobei die Arbeitsweise des Senders (120) und Empfängers (130) auf einem akustischen Signal (110) basiert, wobei es sich bei dem akustischen Signal um einen derart kurzen Impuls in einem Frequenzbereich innerhalb der menschlichen Wahmehmung handelt, welcher vom Nutzer nicht wahrnehmbar ist.

7. Telefonsystem gemäß einem der Ansprüche 1 oder 2, wobei die Sensoreinrichtung einen in oder an dem Mobilteil (200) angeordneten Empfänger (130) und einen in oder an der Wiedergabeeinrichtung (310) angeordneten Sender (120) umfasst, wobei die Arbeitsweise des Senders (120) und Empfängers (130) auf einem akustischen Signal (110) außerhalb des menschlich wahrnehmbaren Frequenzspektrums basiert.

8. Telefonsystem gemäß Anspruch 7, wobei der Arbeitsbereich des Senders (120) und Empfängers (130) in einem Frequenzbereich > 15 kHz liegt.

9. Verfahren zum Betrieb eines Telefonsystems, wobei das Telefonsystem eine Basisstation (100), wenigstens ein drahtlos an die Basisstation (100) signaltechnisch angebundenes Mobilteil (200), wenigstens eine mit der Basisstation (100) signaltechnisch verbundene Wiedergabeeinrichtung (310), **dadurch gekennzeichnet, dass** das Telefonsystem eine signaltechnisch mit der Basisstation (100) verbundene Sensoreinrichtung zur Ermittlung des akustischen Abstandes des Mobilteils (200) zu der Wiedergabeeinrichtung (310) aufweist und die Sensoreinrichtung einen Sender (120) und einen Empfänger (130) umfasst welche auf Basis eines akustischen oder optischen Signals (110) arbeiten und dass ein in das Telefonsystem eingehendes Sprachsignal automatisch über die Wiedergabeeinrichtung (310) wiedergegeben wird, wenn durch die Sensoreinrichtung erkannt wird, dass sich das Mobilteils (200) in akustischen Nähe zur Wiedergabeeinrichtung befindet.

10. Verfahren gemäß Anspruch 9, wobei zur Ermittlung der akustischen Nähe zwischen Mobilteil (200) und Wiedergabeeinrichtung (310) zwischen dem Sender (120) und dem Empfänger (130) der Sensoreinrichtung ein Signal (110) übertragen wird, welches in seiner Verbreitungscharakteristik der Verbreitungscharakteristik einem von der Wiedergabeeinrichtung (310) wiedergegebenen Sprachsignals entspricht.

11. Verfahren gemäß Anspruch 10, wobei zwischen dem Sender (120) und dem Empfänger (130) der Sensoreinrichtung ein Signal (110) außerhalb der menschlichen Wahrnehmung übertragen wird.

12. Verfahren gemäß einem der Ansprüche 9 bis 11, wobei zwischen dem Sender (120) und dem Empfänger (130) der Sensoreinrichtung ein Signal (110) im Infrarot-Bereich übertragen wird.

13. Verfahren gemäß einem der Ansprüche 9 bis 11, wobei zwischen dem Sender (120) und dem Empfänger (130) der Sensoreinrichtung ein akustisches Signal (110) in einem Frequenzbereich > 15kHz übertragen wird.

14. Verfahren gemäß einem der Ansprüche 9 bis 13, wobei das zwischen Sender (120) und Empfänger (130) übertragene Signal (110) moduliert wird.

15. Verfahren gemäß Anspruch 14, wobei das Signal (110) mittels Amplituden- und/oder Phasenmodulation und/oder Frequenz- und/oder Zeitmultiplexing und/oder Codemultiplexing moduliert wird.

## Claims

1. A telephone system, comprising a base station (100), at least one mobile part (200) connected wirelessly to the base station (100) for signal exchange, at least one reproduction device (310) connected to the base station (100) for signal exchange, and a device for forwarding a speech signal entering the telephone system to the reproduction device (310),
**characterised in that** the telephone system comprises a sensor device, which comprises a transmitter (120) and a receiver (130), for determining the acoustic vicinity of the mobile part (200) relative to the reproduction device (310), and wherein an incoming speech signal can be forwarded automatically to a reproduction device (310) by means of the forwarding device when the mobile part (200) is in the acoustic vicinity of the reproduction device (310), wherein the operating principle of the transmitter (120) and receiver (130) of the sensor device is based on an acoustic or optical signal (110).

2. The telephone system according to claim 1, wherein the operating principle of the transmitter (120) and of the receiver (130) of the sensor device is based on an acoustic or optical signal (110) outside the range perceptible by humans.

3. The telephone system according to any one of claims 1 or 2, wherein the sensor device comprises a transmitter (120) arranged in or on the mobile part (200) and a receiver (130) arranged in or on the reproduction device (310), wherein the operating principle of the transmitter (120) and receiver (130) is based on an optical signal (110) outside the electromagnetic spectrum perceptible by humans.

4. The telephone system according to claim 3, wherein the operating principle of the transmitter (120) and receiver (130) is based on an infrared signal (110).

5. The telephone system according to any one of claims 1 or 2, wherein the sensor device comprises a receiver (130) arranged in or on the mobile part (200) and a transmitter (120) arranged in or on the reproduction device (310), wherein the operating principle of the transmitter (120) and receiver (130) is based on an acoustic signal (110) which would be perceptible by humans as a standalone signal, but would not be perceptible by humans on account of maskings by other acoustic signals.

6. The telephone system according to any one of claims 1 or 2, wherein the sensor device comprises a receiver (130) arranged in or on the mobile part (200) and a transmitter (120) arranged in or on the reproduction device (310), wherein the operating principle of the transmitter (120) and receiver (130) is based on an acoustic signal (110), wherein the acoustic signal is a pulse which lies in a frequency range within the range of human perception and which is so short that it is not perceptible by the user.

7. The telephone system according to any one of claims 1 or 2, wherein the sensor device comprises a receiver (130) arranged in or on the mobile part (200) and a transmitter (120) arranged in or on the reproduction device (310), wherein the operating principle of the transmitter (120) and receiver (130) are based on an acoustic signal (110) outside the frequency spectrum perceptible by humans.

8. The telephone system according to claim 7, wherein the operating range of the transmitter (120) and receiver (130) lies in a frequency range > 15 kHz.

9. A method for operating a telephone system, wherein the telephone system comprises a base station (100), at least one mobile part (200) connected wirelessly to the base station (100) for signal exchange, and at least one reproduction device (310) connected to the base station (100) for signal exchange, **characterised in that** the telephone system has a sensor device connected to the base station (100) for signal exchange in order to determine the acoustic distance of the mobile part (200) from the reproduction device (310), and the sensor device comprises a transmitter (120) and a receiver (130) which work on the basis of an acoustic or optical signal (110), and **in that** a speech signal entering the telephone system is automatically reproduced via the reproduction device (310) when the sensor device identifies that the mobile part (200) is in the acoustic vicinity of the reproduction device.

10. The method according to claim 9, wherein a signal (110) is transmitted between the transmitter (120) and the receiver (130) of the sensor device in order to determine the acoustic vicinity between the mobile part (200) and reproduction device (310), which signal corresponds in terms of its distribution characteristics to the distribution characteristics of a speech signal reproduced by the reproduction device (310).

11. The method according to claim 10, wherein a signal (110) outside the range of human perception is transmitted between the transmitter (120) and the receiver (130) of the sensor device.

12. The method according to any one of claims 9 to 11, wherein a signal (110) in the infrared range is transmitted between the transmitter (120) and the receiver (130) of the sensor device.

13. The method according to any one of claims 9 to 11, wherein an acoustic signal (110) in a frequency range > 15 kHz is transmitted between the transmitter (120) and the receiver (130) of the sensor device.

14. The method according to any one of claims 9 to 13, wherein the signal (110) transmitted between the transmitter (120) and receiver (130) is modulated.

15. The method according to claim 14, wherein the signal (110) is modulated by means of amplitude and/or phase modulation and/or frequency and/or time multiplexing and/or code multiplexing.

## Revendications

1. Système téléphonique, présentant une station de base (100), au moins une partie mobile (200) sans fil reliée par une qualité de signal fiable à la station de base (100), au moins un dispositif de reproduction (310) relié par une qualité de signal fiable avec la station de base (100), ainsi qu'un dispositif pour la transmission d'un signal parlé entrant dans le système téléphonique vers le dispositif de reproduction (310),
**caractérisé en ce que** le système téléphonique présente un dispositif de capteur présentant un émetteur (120) et un récepteur (130) pour l'évaluation de la proximité acoustique de la partie mobile (200) par rapport au dispositif de reproduction (310) et où un signal parlé entrant peut être transmis automatiquement à un dispositif de reproduction (310) au moyen du dispositif pour la transmission, lorsque la partie mobile (200) se trouve à proximité acoustique par rapport au dispositif de reproduction (310), où la manière de fonctionner des émetteurs (120) et récepteurs (130) du dispositif de capteur se base sur un signal (110) acoustique ou optique.

2. Système téléphonique selon la revendication 1, dans lequel la manière de fonctionner des émetteurs (120) et des récepteurs (130) du dispositif de capteur se base sur un signal (110) acoustique ou optique en dehors de la perception humaine.

3. Système téléphonique selon l'une des revendications 1 ou 2, dans lequel le dispositif de capteur comprend un émetteur (120) disposé dans ou sur la partie mobile (200) et un récepteur (130) disposé dans ou sur le dispositif de reproduction (310), où la manière de fonctionner de l'émetteur (120) et du récepteur (130) se base sur un signal (110) optique en dehors du spectre électromagnétique perceptible humain.

4. Système téléphonique selon la revendication 3, dans lequel la manière de fonctionner de l'émetteur (120) et du récepteur (130) se base sur un signal (110) infrarouge.

5. Système téléphonique selon l'une des revendications 1 ou 2, dans lequel le dispositif de capteur comprend un récepteur (130) disposé dans ou sur la partie mobile (200) et un émetteur (120) disposé dans ou sur le dispositif de reproduction (310), où la manière de fonctionner de l'émetteur (120) et du récepteur (130) se base sur un signal (110) acoustique qui serait bien perceptible par un humain du fait que c'est un unique signal, mais n'est pas perceptible par un humain en raison d'un masquage par les autres signaux acoustiques.

6. Système téléphonique selon l'une des revendications 1 ou 2, dans lequel le dispositif de capteur comprend un récepteur (130) disposé dans ou sur la partie mobile (200) et un émetteur (130) disposé dans ou sur le dispositif de reproduction (310), où la manière de fonctionner de l'émetteur (120) et du récepteur (130) se base sur un signal (110) acoustique, où il s'agit dans le cas du signal acoustique d'une impulsion si courte dans un domaine de fréquences dans la perception humaine qu'elle n'est pas perceptible par l'utilisateur.

7. Système téléphonique selon l'une des revendications 1 ou 2, dans lequel le dispositif de capteur comprend un récepteur (130) disposé dans ou sur la partie mobile (200) et un émetteur (120) disposé dans ou sur le dispositif de reproduction (310), où la manière de fonctionner de l'émetteur (120) et du récepteur (130) se base sur un signal (110) acoustique en dehors du spectre de fréquences perceptible par un humain.

8. Système téléphonique selon la revendication 7, dans lequel le domaine de fonctionnement de l'émetteur (120) et du récepteur (130) se situe dans un domaine de fréquences > 15 kHz.

9. Procédé de fonctionnement d'un système téléphonique, dans lequel le système téléphonique présente une station de base (100), au moins une partie mobile (200) sans fil reliée par une qualité de signal fiable à la station de base (100), au moins un dispositif de reproduction (310) relié par une qualité de signal fiable avec la station de base (100), **caractérisé en ce que** le système téléphonique présente un dispositif de capteur relié par une qualité de signal fiable avec la station de base (100) pour l'évaluation de l'écart acoustique de la partie mobile (200) par rapport au dispositif de reproduction (310) et le dispositif de capteur comprend un émetteur (120) et un récepteur (130) lesquels fonctionnent sur une base d'un signal (110) acoustique ou optique et qu'un signal parlé entrant dans le système téléphonique est automatiquement reproduit par l'intermédiaire du dispositif de reproduction (310) lorsqu'il est reconnu par le dispositif de capteur que la partie mobile (200) se situe à proximité acoustique par rapport au dispositif de reproduction.

10. Procédé selon la revendication 9, dans lequel, pour l'évaluation de la proximité acoustique entre la partie mobile (200) et le dispositif de reproduction (310), un signal (110) est transmis entre l'émetteur (120) et le récepteur (130) du dispositif de capteur, lequel correspond dans sa caractéristique de propagation à la caractéristique de propagation d'un signal parlé reproduit par le dispositif de reproduction (310).

11. Procédé selon la revendication 10, dans lequel un signal (110) en dehors de la perception humaine est transmis entre l'émetteur (120) et le récepteur (130).

12. Procédé selon l'une des revendications 9 à 11, dans lequel un signal (110) dans le domaine infrarouge est transmis entre l'émetteur (120) et le récepteur (130).

13. Procédé selon l'une des revendications 9 à 11, dans lequel un signal (110) acoustique dans un domaine de fréquences > 15 Hz est transmis entre l'émetteur (120) et le récepteur (130) du dispositif de capteur.

14. Procédé selon l'une des revendications 9 à 13, dans lequel le signal (110) transmis entre l'émetteur (120) et le récepteur (130) est modulé.

15. Procédé selon la revendication 14, dans lequel le signal (110) es modulé au moyen d'une modulation d'amplitudes ou de phases, et/ou un multiplexage fréquentiel et/ou temporel, et/ou un multiplexage par code.
